(19) **Europäisches Patentamt**
**European Patent Office**
**Office européen des brevets**

(11) **EP 4 625 276 A1**

(12) **EUROPEAN PATENT APPLICATION**

(43) Date of publication:
01.10.2025 Bulletin 2025/40

(21) Application number: 24166103.2

(22) Date of filing: 26.03.2024

(51) International Patent Classification (IPC):
$G06Q\ 10/04^{(2023.01)}$ $F24D\ 19/10^{(2006.01)}$
$F24F\ 11/46^{(2018.01)}$ $G01K\ 3/04^{(2006.01)}$
$G06Q\ 50/06^{(2024.01)}$

(52) Cooperative Patent Classification (CPC):
G06Q 10/04; F24D 19/1048; G01K 3/04;
G06Q 50/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BDR Thermea Group B.V.**
**7332 BD Apeldoorn (NL)**

(72) Inventors:
• **VAN DE WEERD, Mathijs**
**7332 BD Apeldoorn (NL)**
• **VIAL, Grégory**
**7332 BD Apeldoorn (NL)**

(74) Representative: **Grabovac, Dalibor**
**AAP Patentanwaltskanzlei Grabovac**
**Pfeivestlstr. 12**
**81243 München (DE)**

(54) **NORMALIZED HEATING ENERGY CONSUMPTION ESTIMATION**

(57) An implementation of the disclosed technology provides a method that includes receiving a setpoint temperature for the building, determining an average outdoor temperature over a first predetermined time period for a location of the building, measuring a total central heating energy consumption for the building over the first predetermined time period, adding the determined average outdoor temperature and measured total central heating energy consumption to a first data set including a plurality of average outdoor temperatures and corresponding total central heating energy consumptions over a plurality of predetermined time periods having durations substantially the same as the first predetermined time period, estimating a weather independent normalized heating energy consumption for maintaining the setpoint temperature in the building based on a predetermined reference outdoor temperature and the first data set, and characterizing the heating energy consumption for heating the building based on the normalized heating energy consumption and a base temperature.

Fig. 1

EP 4 625 276 A1

**Description**

TECHNICAL FIELD

The disclosed technology relates to models of the energy consumed to heat buildings that are normalized against weather influences.

BACKGROUND

Buildings, whether commercial, residential or otherwise in nature, often employ energy management systems to monitor, control and/or otherwise manage the use of energy associated with various utility service and other functions, such as heating, cooling, potable water, electricity, food refrigeration, water heating, etc. More precisely, energy management systems, regardless of their complexity or sophistication, serve to at least monitor the operation of various energy management appliances, such as heating and/or cooling appliances, humidity control appliances, hot water heaters, food storage appliances, cooking appliances, ventilation appliances, etc.

A relatively simple energy management system may employ various sensors to gather data associated with performing such functions at a building, such as indoor and/or outdoor temperature and/or humidity, amount of precipitation, usage of water and/or various fuels, local generation and/or usage of electricity, etc. Such gathered data may then be organized chronologically and stored with a regular interval of time (e.g., hourly, daily, etc.). However, in such a relatively simple energy management system, it is not uncommon for such data to simply sit in storage with little or no use being made thereof, regardless of its level of detail. It may be that such data is put to use for little more than diagnostics purposes by service personnel during maintenance and/or repairs performed on such an energy management system. Alternatively or additionally, it may be that such data is put to use for little more than guiding consulting personnel in making recommendations concerning improvements to such an energy management system.

A somewhat more sophisticated energy management system may, at a recurring interval of time, automatically use such stored data to make some degree of adjustment to the manner in which various energy management appliances are used to improve the efficiency and/or cost effectiveness with which energy is used in a building. For example, such gathered data may be used in conjunction with information concerning weather forecasts and/or utility rates to adjust the times at which such energy management appliances are used (e.g., delaying start and/or stop times) to shift more of the consumption of energy to times when utility rates are lower. It may be that such a more sophisticated energy management system may be provided with various parameters indicative of degrees by which specifications of temperature, humidity, lighting, timings, etc. may be deviated from as part of adjusting times, etc.

Alternatively or additionally, a somewhat sophisticated energy management system may cooperate with the grid-wide energy management system of a provider of a utility to a building, such as potable water, natural gas, electricity, etc. to adjust the times at which energy management appliances are used. In this way, energy use during peak hours of each day may be reduced by shifting about when various energy management appliances are used. In such a somewhat sophisticated energy management system, such adjusting of times at which energy is used may entail cutting off the provision of energy to one or more energy management appliances to prevent their use during peak hours. In such an energy management system, data gathered locally by sensors of the energy management system may be relayed to the grid-wide energy management system for use, rather than being used locally.

For example, whether controlled locally or in coordination with a grid-wide energy management system, energy "time-shifting" has become increasingly common in regions where electric rates are relatively high during peak demand hours and/or where the electrical grid struggles to meet the demand for electricity during peak demand hours. Energy may be locally stored during hours of lesser demand (e.g., electrical energy storage, thermal energy storage, etc.). Such stored energy may then be used later for at least some of the energy needs at the building during peak demand hours.

Also by way of example, installation of a combination of local electricity generation using renewable energy sources (e.g., local solar array, local windmill, etc.) and local electrical energy storage has become increasingly common, both to reduce energy costs and to reduce environmental impacts. However, such installations often additionally include either a connection to an electrical grid or the ability to locally generate electricity using a non-renewable energy source (e.g., natural gas, propane, etc.) at times when the local generation of electricity from renewable energy sources has been insufficient (e.g., where there are multiple days of insufficient sunshine and/or insufficient wind). An energy management system employed at such an installation may be provided with settings that convey priorities thereto (e.g., opportunistically use available renewable energy sources whenever possible, and resort to the use of a grid connection and/or non-renewable energy sources as a last resort). A form of "time-shifting" may be used to adjust the times at which renewable energy sources are consumed to give priority to charging batteries.

In a somewhat more sophisticated energy management system, such gathered data may be used to preemptively generate multiple predictions of levels of energy consumption that correspond to a pre-selected set of setpoint temperatures. As depicted and described in reference to at least FIGS. 1 and 2 of US9727063, a set of predictions of levels of energy consumption may be preemptively generated for a set of pre-selected candidate setpoint temperatures. Then, at a later time, when a level of energy consumption is needed for a prediction and/or another purpose, degrees of error for levels of energy consumption corresponding to at least the nearest setpoint temperatures may be generated and then used to pick from among one of the preemptively generated levels of energy consumption for one of the pre-selected setpoint temperatures. While this approach may minimize processing and/or data storage resources, this approach inherently introduces an amount of error into predictions and/or other analyses that may be based on one of the preemptively generated levels of energy consumption.

In a more sophisticated energy management system, such gathered data may be used together with still other information from other sources to identify opportunities to reduce energy consumption. As disclosed in US20150267935, an energy management system may monitor changes made to a setpoint, and may analyze such a change to determine whether it represents an opportunity to reduce energy consumption. If so, then such an energy management system may present a user with a prompt suggesting that the new setpoint be adopted in order to reduce expenses through the identified reduction in energy consumption.

As depicted and described in reference to at least FIG. 2 of US20150267935, such detection of such an opportunity may be through comparing at least the new setpoint to one or more data sets provided by a governmental organization, such as the Environmental Protection Agency in the United States. Unfortunately, this approach requires access to and/or storage of a considerable amount of data, thereby increasing required data storage resources. Alternatively, such detection of such an opportunity may be through determining whether the new setpoint represents a reduction in temperature of sufficient magnitude that is larger than a threshold quantity of degrees. While this approach requires considerably less in the way of data storage resources, it does not include deriving the quantitative change in energy consumption that would arise from adopting the new setpoint.

Also in a more sophisticated energy management system, such gathered data may be used to construct a visual presentation of a recent history of recent energy consumption. As described and depicted in reference to at least FIG. 10 of US9453655, such a visual presentation may include indications of functions and/or particular components of an energy management system that are deemed to be responsible for causing overall increases in energy consumption or causing overall decreases in energy consumption. However, to enable such functionality, separate energy consumption calculations must be performed for each component that consumes energy, and the results of such calculations for each such component must be stored. Thus, both processing and data storage requirements are considerably increased for such an energy management system.

In a still more sophisticated energy management system, such gathered data may be used to generate and maintain a model of energy consumption that occurs at a building, including energy consumption associated with multiple utility service functions. Such a model may necessarily include influences of the building, itself, along with energy management appliances at the building. More specifically, such aspects of a building as the degree to which its walls, windows, etc. are insulated and/or made resistant to drafts may influence the efficiency and/or effectiveness with which various energy management appliances may heat, cool humidify, dehumidify and/or ventilate the building. Alternatively or additionally, such aspects of a building as material used for its exterior surfaces, and/or the color and/or darkness of those exterior surfaces may control the degree to which sunlight levels influence interior temperatures of the building. Also, alternatively or additionally, such aspects of a building as the material it is made from, and/or aspects of the manner in which the building interacts with the ground and/or with precipitation may influence the efficiency and/or effectiveness with which various energy management appliances may control humidity and/or other aspects of air quality within building.

It may be that such a model is used to predict amounts of energy that will be consumed during various ranges of time of a day and/or during various days of a week. Such predictions may be used to automatically adjust times at which various energy management appliances are used, and/or to control the use of time-shifting to store electrical and/or thermal energy.

As disclosed in US11268732, such a model for the overall consumption of energy at a building may be normalized against weather influences. This enables such a model to be more readily used to make a prediction concerning overall energy consumption at a building during an upcoming period of time. This also enables making such a prediction while taking into account weather conditions that are forecasted for that upcoming period of time. As described and depicted in reference to at least FIGS. 52-54 of US11268732, such normalization against weather influences may be achieved by generating a regression model of the weather for an earlier period of time, and then using that regression model to counteract weather influences that are included within overall energy consumption data that has been gathered at a recurring interval during that same earlier period of time. The result is a derived time series of overall energy consumption data that is normalized against weather influences. While such an approach to normalization as disclosed in US11268732 may be effective, it is undesirably complex such that considerable processing and/or data storage resources are required.

In still another more sophisticated energy management system, such gathered data may be used together with data concerning the geographic location of a user to cause the automated adjusting of a setpoint based on the distance of the user from a building. As depicted and described in reference to at least FIGS. 3A-D and 4 of US9618227, stored observations of interior temperature changes are used, along with stored observations of travel times are used to determine what changes to make in the setpoint, and when. By way of example, where a user is driving away from the building, the direction in which they are driving and how far they are away from the building may be used to determine how far to allow the interior temperature to deviate from the setpoint temperature. Previously stored observations may reveal that returning to building from one direction takes more time than returning from another direction. Also, previously stored observations may reveal that one energy management appliance is able to return the building interior to the setpoint temperature more quickly than another.

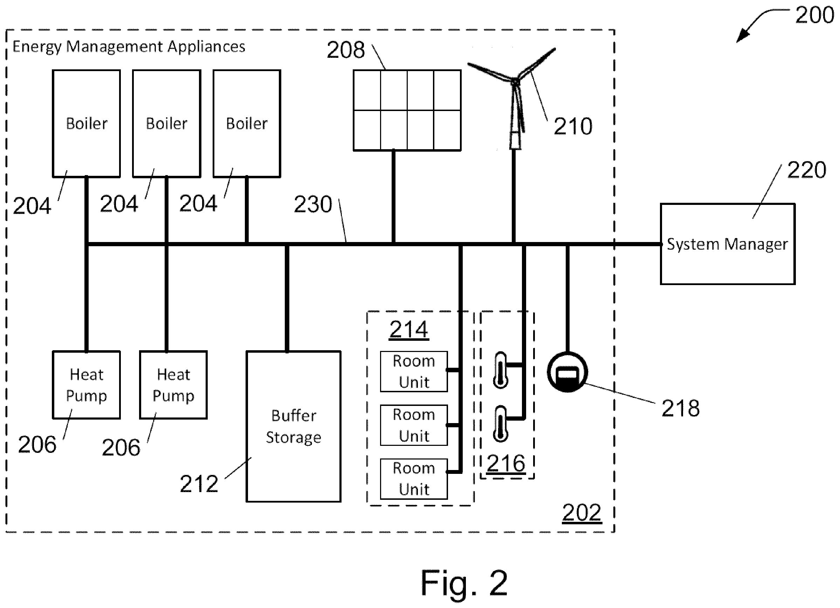

As further depicted and described in reference to at least FIG. 2 of US9618227, following the storage of a sufficiently large set of such observations over time, a set of distances from the building (represented by rings in FIG. 2) may be derived that represent distances at which various configuration changes, including changes to setpoint temperatures may be triggered. Unfortunately, gathering and store such a diverse set of data concerning distances, directions, past temperature change observations, etc. greatly increases data storage requirements for such an energy management system.

SUMMARY

Based on the above, it is an object to provide a method of automatically generating and maintaining a model of the consumption of energy used to heat a building that is normalized against weather influences. It is also an object to do so in a manner that minimizes complexity so as to minimize the consumption of processing and/or data storage resources. In so doing, the need to use more sophisticated and costly processing and/or data storage components is averted. As a result, the generation and maintenance of such a model of heating-related energy consumption may be performed using the relatively simpler and less expensive processing and/or data storage components of simpler processing devices, such as a thermostat or other controller that may be incorporated into a heating appliance.

Additionally, in this way, the generation and maintenance of such a normalized model may be more easily performed locally at a building without the support of remotely located (e.g., cloud-based) resources. As a result, the generation and maintenance of such a model may be enabled at a building in a relatively secluded location where access to the Internet may not be available, or may not be reliable.

Thus, it is another object to provide an inexpensive controller for one or more energy management appliances that serve to heat a building, where the controller generates and maintains such a normalized model of heating-related energy consumption at the building. Such a controller may be a physical controller installed at the building, and may be capable of generating and maintaining such a model without the aid of processing and data storage resources of remotely located devices. Indeed, such a controller may be incorporated into a networking device at the edge of a network installed at the building. Or, such a controller may be incorporated into a thermostat by which the setpoint temperature of the building may be manually set.

Alternatively, such a controller may be a virtual controller located remotely (e.g., cloud-based), but its relatively minimal processing and/or data storage requirements may enable the provision of such a virtual controller for a minimal fee or no fee, at all. Indeed, such minimal processing and/or data storage requirements may enable a greater quantity of such virtual controllers to be maintained within a smaller quantity of remotely located servers, and/or may enable older servers of lesser capability than newer ones to be used. In this way, older servers may be given a new function by which their productive years in use may be extended. Further, with such a remotely located controller, continuity of data gathered at the building may be maintained by being preserved in remotely located storage on such a remotely located server, thereby allowing components of an energy management system to be entirely replaced without a risk of loss of such data.

It is another object to provide an energy management appliance that serves to heat a building, and that incorporates such relatively simple and inexpensive processing and/or data storage resources to generate and maintain such a normalized model of heating-related energy consumption at the building. Alternatively, it is another object to provide a networking device (e.g., a router, hub, switch, edge device such as a modem, etc.) in which such generation and maintenance of such a normalized model is performed. In this way, the need to provide, either remotely or locally at the building, a physically separate controller incorporating more sophisticated and expensive processing and/or data storage resources is averted.

It is still another object to provide such a relatively inexpensive controller that, on a recurring basis, re-generates such a normalized model of the consumption of heating energy at a building to perform various analyses. Such a recurring basis may be hourly, daily, weekly, bi-weekly, monthly, or still other recurring intervals of time. Such analyses may include the derivation of recommendations for improvements to insulation and/or other recommendations to improve the ability of the building to conserve heat energy, thereby increasing the efficiency and/or effectiveness with which the building is able to be heated. Such analyses may include the derivation of recommendations to add electrical, thermal and/or other forms of energy storage to the building to improve the efficiency and/or cost effectiveness with which the building is heated. Such analyses may include detecting changes in patterns of user behavior, and providing notices of such changes to users, especially where such changes result in increased consumption of heating energy. Such analyses may include predicting levels of consumption of heating energy in view of weather forecasts for upcoming hours and/or days. Such analyses may include the derivation of recommendations for user behavioral changes to increase the efficiency and/or cost effectiveness with which the building is heated.

It is still another object to provide such results of such analyses to a user of the energy management system to the user visually in a visual presentation on a viewing screen of a controller of the energy management system (e.g., a central controller of the energy management system, a loop controller of an energy management appliance of the energy management system, etc.), or on a viewing screen of a remote portable device (e.g., a tablet computer, a portable computer, a smart phone, etc.). Such a visualization may be provided through a web browser, through an application programming interface (API), or using any of a variety of other communication protocols for transmitting visual data and/or using any of a variety of other application level visualization viewing routines.

It should be understood that implementations of the present technology each have at least one of the above-mentioned objects and/or aspects, but do not necessarily have all of them. Some aspects of the present technology that have resulted from attempting to attain the above-mentioned objects may not satisfy these objects and/or may satisfy other objects not specifically recited herein.

In some implementations, the disclosed technology provides a method for characterizing energy consumption for heating an indoor building. The method includes receiving a setpoint temperature for the building, determining an average outdoor temperature over a first predetermined time period for a location of the building, measuring a total central heating energy consumption for the building over the first predetermined time period, adding the determined average outdoor temperature and measured total central heating energy consumption to a first data set including a plurality of average outdoor temperatures and corresponding total central heating energy consumptions over a plurality of predetermined time periods having durations substantially the same as the first predetermined time period, estimating a weather independent normalized heating energy consumption for maintaining the setpoint temperature in the building based on a predetermined reference outdoor temperature and the first data set, and characterizing the heating energy consumption for heating the building based on the normalized heating energy consumption and a base temperature.

In some implementations, the first predetermined time period has a duration of one day, the plurality of average outdoor temperatures include daily average outdoor temperatures, and the total central heating energy consumptions include daily total heating energy consumptions on days for which the total central heating energy consumption was zero and on days for which the total heating energy consumption was non-zero.

In some implementations, the predetermined reference outdoor temperature is selected to be near the median of daily average outdoor temperatures that lie below the base temperature.

In some implementations, the predetermined reference outdoor temperature is 3° C or 5° C.

In some implementations, calculating the weather independent normalized heating energy consumption for the building based on the first data set includes using a linear fit through the data of the first data set.

In some implementations, the weather independent normalized heating energy consumption for the building is determined by evaluating the linear fit at the predetermined reference outdoor temperature.

In some implementations, the linear fit includes a least squares fit.

In some implementations, calculating the weather independent normalized heating energy consumption for the building based on the first data set includes fitting the first data set to a model of a heat balance for the building.

In some implementations, calculating the weather independent normalized heating energy consumption for the building based on the first data set includes calculating a heating energy consumption per heating degree day, wherein heating degree days are determined by subtracting the average temperature at the building location over a day from the base temperature if the average temperature at the building location over the day is lower than the base temperature, and determining the heating degree days to be zero for days on which the average temperature at the building location over the day is greater than or equal to the base temperature.

In some implementations, calculating the base temperature includes: calculating a zero energy probability density function based on outdoor temperature and corresponding measured total central heating energy consumptions in the first data set for which the measured total central heating energy consumption was zero, the zero energy probability density function providing a probability of having a total central heating energy consumption of zero for a given outdoor temperature; calculating a nonzero energy probability density function based on outdoor temperature and corresponding measured total central heating energy consumptions in the first data set for which the measured total central heating energy consumption was non-zero, the nonzero energy probability density function providing a probability of having a non-zero total central heating energy consumption for a given outdoor temperature; determining an overlap range of outdoor temperatures over which the zero energy probability density function and the nonzero probability density function overlap; and calculating the base temperature to be a temperature within the overlap range.

In some implementations, the first predetermined time period has a duration of one hour or one day.

In some implementations, determining an average outdoor temperature includes accessing the average outdoor temperature for a location of the building in a remotely maintained database.

In some implementations, determining an average outdoor temperature includes measuring the outdoor temperature at the location of the building using a temperature sensor.

In some implementations, the disclosed technology provides an energy management system including a processor, and memory to store program instructions operable to cause the processor to perform operations according to the method.

In some implementations, the disclosed technology provides a computer program product including program instructions operable to cause a processor to perform the method.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

In the context of the present specification, unless expressly provided otherwise, directions indicated by terms such as "top", "bottom", "upper", "lower", "above", "below", etc., are used in their usual sense - i.e., relative to a gravitational direction or axis.

Additional and/or alternative features, aspects and advantages of implementations of the present technology will become apparent from the following description, the accompanying drawings and the appended claims.

## BRIEF DESCRIPTION OF THE DRAWINGS

In the figures, the subject-matter of the disclosure is schematically shown, wherein identical or similarly acting elements are usually provided with the same reference signs.

FIG. 1 is a block diagram of an example controller that could be used in some implementations of an energy management system.

FIG. 2 is a block diagram of an example energy management system.

FIG. 3 is a block diagram of an example energy management appliance of an energy management system.

FIG. 4 is a block diagram of a portion of structure of a building.

FIGS. 5 and 6 are graphs of relationships between variables.

FIGS. 7 and 8 are graphs of relationships between data points and variables.

FIGS. 9, 10 and 11 are block diagrams of alternate methods of estimating base temperature.

FIGS. 12, 13 and 14 are graphs of relationships between data points and variables.

FIG. 15 is a block diagram of a method of estimating energy savings.

FIGS. 16 and 17 are depictions of visual presentations on viewing screens.

FIG. 18 is a block diagram of a method of guiding a user to increase energy savings.

## DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative systems embodying the principles of the present technology.

With these fundamentals in place, we will now consider some nonlimiting examples to illustrate various implementations of aspects of the present disclosure.

## Controller

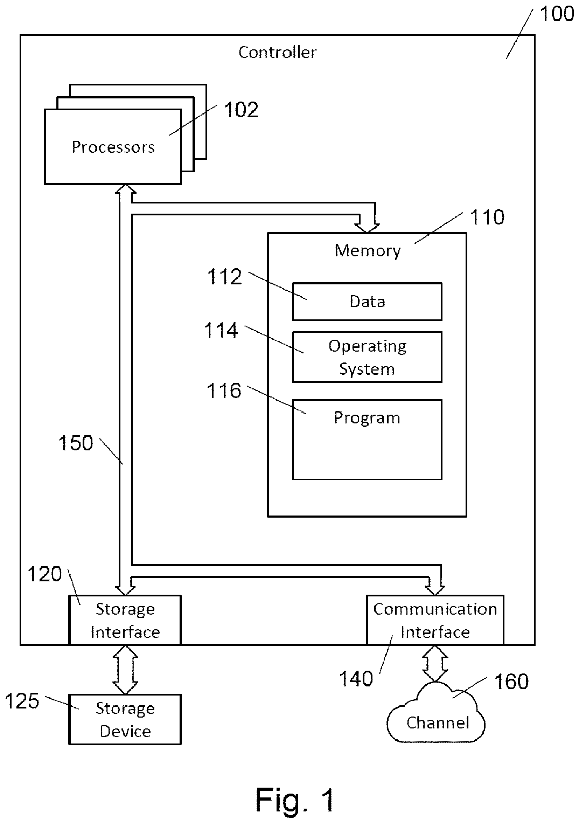

FIG. 1 depicts an example controller 100, which may be any type of computer system or embedded controller. It will be recognized that some or all the components of the controller 100 may be virtualized and/or cloud-based. As depicted, the controller 100 may include one or more processors 102, a memory 110, a storage interface 120, and a communication interface 140. These system components may be interconnected via a bus 150, which may include one or more internal and/or external buses (e.g. a PCI bus, universal serial bus, IEEE 1394 "Firewire" bus, SCSI bus, Serial-ATA bus, etc.), to which these various hardware components may be electronically coupled.

The memory 110, which may be a random-access memory or any other type of memory, may contain data 112, an operating system 114, and a program 116. The data 112 may be any data that serves as input to or output from any program in the controller 100. The operating system 114 may be an operating system such as MICROSOFT WINDOWS, LINUX, FreeRTOS, or any other operating system suitable for use on a computer system or microcontroller. The program 116 may be any program or set of programs that include program instructions that may be executed by the processor to control actions taken by the controller 100. In particular, the program 116 may include program instructions that, when executed by the processor, cause the processor to carry out one or more of the methods described below.

The storage interface 120 may be used to connect storage devices, such as the depicted storage device 125, to the controller 100. The storage device 125 may be a solid-state drive using an integrated circuit assembly to store data persistently. Alternatively, the storage device 125 may be a hard drive using any of a variety of types of magnetic storage media to store and retrieve digital data. As another alternative, the storage device 125 may be an optical drive, or a card reader that receives a removable non-volatile semiconductor memory card. As still another alternative, the storage interface 120 may provide a universal serial bus connection to which the storage device 125 may be hot-pluggable, and the storage device 125 may be a flash memory device (e.g., a USB thumb drive).

In some implementations, the controller 100 may use well-known virtual memory addressing techniques that allow the programs of the controller 100 to behave as if they have access to a large, contiguous address space instead of access to multiple, smaller storage spaces, such as the memory 110 and the storage device 125. Therefore, while the data 112, the operating system 114, and the programs 116 are depicted as residing in the memory 110, those skilled in the art will recognize that these items may not all be wholly contained in the memory 110 at the same time.

The one or more processors 102 may include one or more microprocessors and/or other integrated circuits able to execute program instructions stored in the memory 110. When the controller 100 starts up, the processor(s) 102 may initially execute program instructions of a boot routine and/or the program instructions that make up the operating system 114.

The communication interface 140 may be used to communicatively connect the controller 100 to other controllers, computer systems, or still other devices (not shown) via a communication channel 160. The communication channel 160 may be a serial or parallel connection, a wired, wireless, mesh or cellular network, or any other type of communication channel or combination of channels. Data and/or program instructions may be sent to the controller 100 as signals via the communication channel. The communication interface 140 may include a combination of hardware and software that enables communications on the communication channel 160. The software in the communication interface 140 may include software that uses one or more communication protocols to communicate over the communication channel 160, including and not limited to, network protocols such as TCP/IP (Transmission Control Protocol/Internet Protocol).

It will be understood that the depicted controller 100 is merely an example, and that the technology disclosed herein may be used with a wide variety of other controllers or computer systems, or still other computing devices having different configurations.

Energy Management System

FIG. 2 depicts an example energy management system 200. The energy management system 200 is generally used to provide various energy management needs, such as heating, cooling, hot water, electricity, etc. at a building, such as a residential dwelling. However, it will be understood that the energy management system 200 may be used in other types of buildings, such as apartment buildings or other multi-dwelling buildings, office buildings, or any other type of building at which heating, cooling, hot water, and/or electricity systems are installed and/or controlled. In such buildings, each portion of the building, such as each residence, floor, or office suite, may be considered a separately controllable zone in the energy management system, in some implementations. It will also be appreciated that an energy management system, such as energy management system 200, may be used in still other applications for controlling the delivery of heating, cooling, hot water, and/or electricity. For example, such an energy management system may be used in a block system, which delivers energy from a central plant to numerous buildings or dwellings across one or more blocks, typically in an urban area.

As depicted, the energy management system 200 may include one or more energy management appliances 202. As used herein, an energy management appliance may be a device that generates usable energy and/or manages, controls, and/or senses conditions relevant to usable energy in a form such as heat, cold, mechanical, and/or electrical energy. Thus, the energy management appliances 202 may include devices such as boilers, heat pumps, air conditioning units, fire places, ventilation devices, etc. The energy management appliances 202 may include energy producers, such as photovoltaic panels or wind turbines. The energy management appliances 202 may also include other devices that are part of energy management system 200, such as buffers or batteries, controllers and communication devices, sensors, thermostats, room units, controllable valves for radiators, and/or other devices or modules (including software modules), that generate, manage, control, and/or sense conditions relevant to the operation of energy management system 200.

The energy management appliances 202 may include one or more boilers 204. Each boiler 204 may be powered using fossil fuels, such as natural gas, propane or oil, or may be powered using other fuel sources, such as hydrogen, or by some combination of such fuel sources. The operation of boilers is generally well known in the art. The boilers 204 provide heat, usually transferred to a fluid carrier medium, which is typically water. Hot water or steam supplied by a boiler such as boilers 204 may be used, for example, for domestic hot water supply and/or heating applications.

The energy management appliances 202 may include one or more electric heat pumps 206. The operation of electric heat pumps is well known in the art. Heat pumps 206 providing heating and/or cooling by moving heat between environments. While often more energy efficient than boilers, the efficiency of heat pumps typically depends on outdoor temperatures, and operate over a limited temperature range.

The energy management appliances 202 may include renewable energy generation devices, such as photovoltaic panels 208 and/or a wind turbine 210. Such renewable energy generation devices typically generate electricity. However, solar thermal panels use sunlight to heat water or other fluids directly.

The energy management appliances 202 may include buffer storage 212. Buffer storage temporarily stores energy of the various types typically managed in an energy management system 200. An example of buffer storage may be an insulated hot water tank used to store hot water, or a chemical energy storage system (e.g., a battery) used to store electrical energies. For example, in some implementations, one or more organic redux flow batteries, lead-acid batteries, or lithium ferrophosphate batteries may be used to store electrical energy. Other less common buffer storage systems, such as ice storage or mechanical energy storage systems, are also known in the art.

The energy management appliances 202 may also include other devices such as room units 214, sensors 216, a smart meter 218, and other similar devices. It will be understood that in some implementations, these devices, which are not directly involved in the generation of usable energy in the form of heat, cold, and/or electricity, might not typically be considered to be energy management appliances, but may nonetheless be part of the depicted example energy management system 200.

Although many types of energy management appliances are discussed above, it will be understood that this is not an exhaustive list. For example, energy management systems may include energy management appliances fuelled by wood pellets or still other fuel sources. In some energy management systems, combined heat and power (CHP) energy management appliances may be used. More broadly, and as will be recognized by those skilled in the art, there is a wide variety of types of energy management appliance that may be used in an energy management system such as the depicted example energy management system 200.

In accordance with the technology disclosed herein, the depicted example energy management system 200 may also include a system manager 220 that provides centralized control over activities occurring within the energy management system 200. The system manager 220 may be implemented using a controller, such as the controller 100 depicted and described in reference to FIG. 1, or any other suitable controller, microcontroller, or computer system. As depicted, the system manager 220 may be implemented as a physically separate and distinct unit, and may be located either within or external to the energy management system 200.

Alternatively, the system manager 220 may be implemented as a software module that operates on any controller or computing device connected to or incorporated into an energy management appliance of the energy management system 200. As still another alternative, the system manager 220 may be implemented as a software module that operates in a virtual environment provided by a remotely located server (e.g., cloud-based), where such a virtual environment may be one of numerous such virtual environments provided within such a server such that multiple instances of the system manager 220 may be supported for multiple corresponding buildings.

As will be readily recognized by those skilled in the art, different implementations of the system manager 220 may have widely differing capabilities. By way of example, a physically separate and distinct form of the system manager 220 may incorporate considerable processing and/or data storage capabilities, thereby making such an implementation of the system manager 220 capable of performing relatively complex operations with large sets of data, including generating and maintaining a model of the entirety of the energy management system 200 and/or the building at which the energy management system 200 is installed. This may enable such an implementation of the system manager 220 to generate predictions of upcoming demands that will be made of the energy management system 200, and thus, may enable the system manager 220 to preemptively use components of the energy management system 200 to prepare for such demands. In contrast, and also by way of example, a form of the system manager 220 that is incorporated into a controller of an energy management appliance 202 (e.g., as a software module) may have access to relatively minimal processing and/or data storage resources, thereby limiting the complexity of the operations that it is able to perform.

Because different energy management appliances 202 have varying (and sometimes conflicting) capabilities, characteristics, and requirements, the system manager 220 attempts to use information stored within one or more of the energy management appliances 202 to coordinate activities among the energy management appliances 202 within the energy management system 200 to meet user demands. Generally, the system manager 220 receives requests from users through, for example, room units 214. The system manager 220 attempts to fulfill these requests by sending commands to one or more of the energy management appliances 202. Information from the sensors 216 and/or the energy management appliances 202 concerning current conditions of operation are also received by system manager 220, and are used to coordinate activities within the energy management system 200 to meet user requests. Once the system manager 220 has determined how a request may be at least partially fulfilled, the system manager 220 sends such commands as on/off commands and/or setpoints to the one or more energy management appliances 202 that will be used to at least partially fulfill the request. It should be noted that, in some instances, a received request may be a forecasted demand. In such cases, fulfilling the request may be used to prepare for handling the forecasted demand. Such a forecasted demand may be generated using a model or simulation, either on an external device, or within the system manager 220, itself.

System manager 220 may communicate with the energy management appliances 202, as well as other devices connected to energy management system 200, via a communication channel 230. The communications channel 230 may employ any of a variety of optical, electrically wired, and/or wireless communications technologies. For example, system manager 220 and energy management appliances 202 may communicate wirelessly using a wireless communication protocol, such as WIFI, Bluetooth, or Zigbee. It will further be understood that although the communication channel 230 is depicted as being based on a network having a bus topology, this is merely for ease of illustration, and any other suitable network topology may be used. For example, a mesh network, star network, ring network, tree network or hybrid network topology may be used. Though not specifically depicted, it should be understood that the communication channel 230 may include such well-known components as network hubs, repeaters and/or media converters.

In some implementations, the system manager 220 may include an external communication module (not shown) that may allow it to communicate over the Internet or other wide-area network (not shown), and with sources of information and/or with controllers or other devices outside of the energy management system 200. This may permit the system manager 220 to receive such information as weather forecasts, current weather conditions (e.g., weather conditions detected by network-connected local weather stations), current energy pricing, current energy usage restrictions imposed by a government or grid operator, and/or other information on external conditions and limitations that may be relevant to operation of the energy management system 200. The system manager 220 may also receive commands and/or user preferences or settings via the Internet or other wide-area network. For example, a user may use an app running on a mobile phone, tablet, computer system, or other external device to issue commands to the system manager 220. In some implementations, devices, such as room units, thermostats, and/or sensors may not be considered to be energy management appliances or to be a part of the energy management system 200. In these implementations, such devices may communicate with the system manager 220 as external sources. Additionally, in some implementations, the system manager 220 may be in communication with external services, such as predictive maintenance services, cloud-based and/or AI-based energy control systems, local or regional energy usage control systems, and the like.

Energy Management Appliance

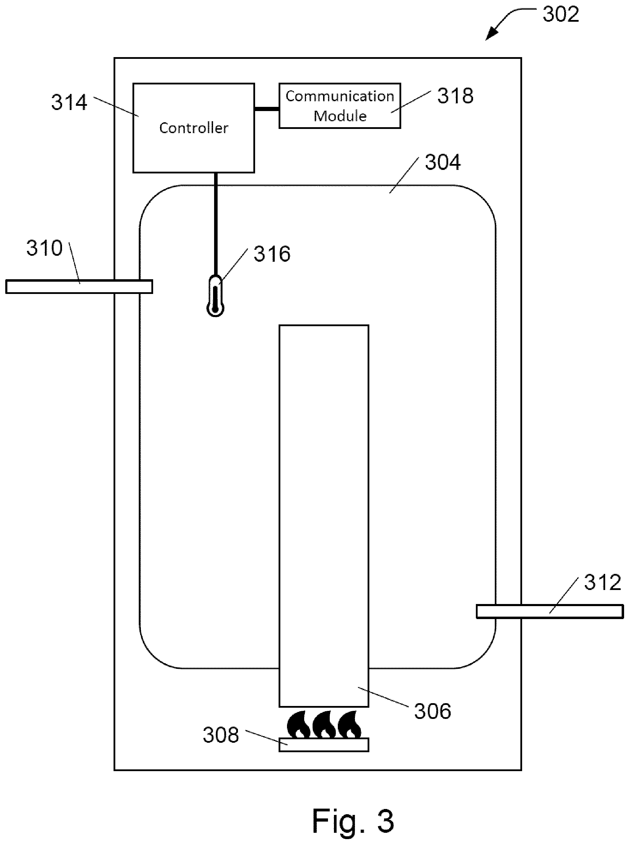

FIG. 3 depicts an example energy management appliance of the example energy management system 200 of FIG. 2. More specifically, the boiler 302 depicted in FIG. 3 may be one of the boilers 204 of the energy management system 200 of FIG. 2.

As depicted, the boiler 302 may include a tank 304, a heat exchanger 306, a burner 308, a supply pipe 310, a return pipe 312, a controller 314, a temperature sensor 316 and/or a communication module 318. While these particular example components are specifically depicted, it will be understood that numerous other components that are not specifically depicted may make up a typical boiler, such as temperature and pressure relief valves, an expansion tank, a circulator pump, and the like. Boilers for domestic hot water supply are well-known in the art.

The controller 314 may be connected to one or more sensors, such as the temperature sensor 316, which may be used to measure the temperature of the water in the boiler 302. In a typical boiler, there may be any of a variety of other sensors, such as pressure sensors, flow sensors, oxygen and/or carbon monoxide sensors, flame sensors, water level sensors, and the like. The controller 314 may also be connected to the communication module 318, which may facilitate communication with a system manager of an energy management system that may include the boiler 302 (e.g., the system manager 220 of the energy management system 200 of FIG. 2). The communication module 318 may be integrated with controller 314 or may be a separate module that is connected to controller 314 through an interface.

The controller 314 may regulate the operation of boiler 302 based on input from sensors, and/or based on settings and/or commands received from a system manager. The controller 314 may use a combination of software algorithms, control logic, and/or feedback loops to control the operation of the components of boiler 302 by, for example, adjusting a fuel flow rate, changing pump speeds, and opening/closing valves to maintain a desired temperature in the boiler 302, and/or to control other functions and/or operating parameters of boiler 302. The controller 314 may also use data collected by sensors to monitor conditions within boiler 302, to detect deviations from desired setpoints, and/or to determine whether there have been any malfunctions or other conditions that could affect the operation, safety, and/or reliability of the boiler 302.

The controller 314 may receive commands from, and send information to, a system manager of an energy management system. The information sent to the system manager may include, for example, information collected by sensors of the boiler 302, information on conditions within the boiler 302, and/or information concerning alarms and/or warnings regarding malfunctions occurring within the boiler 302. The controller 314 may receive commands from the system manager to, for example, adjust setpoints, provide specified information, start or stop the boiler 302, start or stop subsystems of the boiler 302, and the like.

It will be understood that the boiler 302 is merely an illustrative example of an energy management appliance, and that any type of energy management appliance that is part of the energy management system 200 of FIG. 2 may include a controller, similar to the controller 314, and a communication module similar to the communication module 318. The variety of components that may be incorporated into such energy management appliances will depend on the type of energy management appliance. It will further be understood that in some implementations, multiple energy management appliances could be controlled by a single controller, similar to the controller 314 of the boiler 302. Alternatively, multiple energy management appliances, each with its own controller, may communicate with the system manager, using a single shared communication module.

It should further be noted that controllers for energy management appliances, such as the controller 314 of the boiler 302, may be referred to herein as closed loop controllers. Generally, a closed loop controller is a type of control system that uses feedback from one or more sensors to adjust the output of a control signal to maintain a desired setpoints. While the controllers for many energy management appliances fit this description, the term closed loop controller may be used herein for any controller that is incorporated into an energy management appliance, regardless of whether such a built-in controller makes such use of such sensor feedback.

Building Characteristics

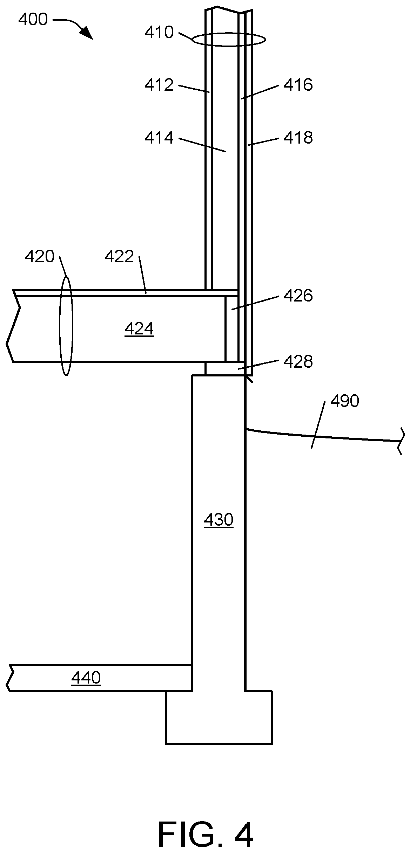

FIG. 4 depicts a cross-section of a portion of the structure of an example building 400 at which the example energy management system 200 may be installed. More specifically, a cross-sectional view is presented of a portion of the exterior structure of the example building 400 that includes portions of a basement and a ground floor thereof.

As depicted, the example building 400 employs a wood frame construction in which at least a substantial portion of the structure above ground is built using dimensional lumber. The depicted portion of the structure at the ground floor includes portions of an exterior wood framed wall 410 and a wood framed floor 420 that are supported above a basement. The depicted portion of the structure of the basement includes portions of an exterior wall 430 and a floor 440 that may both be formed from poured concrete. As also depicted, at least a portion of the exterior wall 430 of the basement is in contact primarily with a portion of the ground 490 on which the building 400 is constructed. In contrast, the exterior wall 410 of the ground floor is exposed to the outdoor weather, but is not in contact with the ground 490.

The depicted portion of the exterior wall 410 of the ground floor may include an interior surface material 412 (e.g., plaster, drywall, cement fiber board, wood, etc.), wall studs 414 (e.g., vertically extending pieces of dimensional lumber), exterior sheathing 416 (e.g., sheets of plywood or oriented strand board), and an exterior surface material 418 (e.g., wood, brick, stucco, metal sheets, etc.). The depicted portion of the floor 420 of the ground floor may include at least a subfloor material 422 (e.g., sheets of plywood or oriented strand board), and a combination of floor joists 424, a rim joist 426 and a sill plate 428 (e.g., horizontally extending pieces of dimensional lumber).

The depicted portion of the exterior wall 430 of the basement may be formed entirely of poured concrete, and may be shaped to include a widened portion at the base that defines a footer. The depicted portion of the floor 440 of the basement may be formed entirety of a relatively thick sheet of poured concrete that extends no further than to the interior surfaces of the exterior walls 430 of the basement.

Although not specifically depicted, voids in at least the exterior wood framed walls of the building 400, such as the depicted portion of the exterior wall 410, may be filled largely with insulation material (e.g., fiberglass, cellulose, mineral wool, recycled denim, etc.) to improve the ability of those exterior walls to reduce the passage of heat energy therethrough. More specifically, when the outdoor temperature is higher than the setpoint temperature that a user has specified for the interior of the building 400, such insulated exterior walls serve to resist the penetration of heat energy into the interior of the building 400 from the outside. Correspondingly, when the outdoor temperature is lower than the setpoint temperature that a user has specified for the interior of the building 400, such insulated exterior walls serve to resist the escape of heat energy from the interior of the building 400 to the outside.

Beyond better insulation of the exterior walls 410 that are above the level of the earth 490, various steps may be taken with regard to windows (not specifically depicted) of the building 400. Among such steps may be the use of windows employing multiple layers of glass that are separated by a vacuum or particular gases, instead of windows employing just a single layer of glass. In this way, the windows also become insulated to a greater degree, thereby resisting the penetration of heat energy therethrough in ways similar to what is achieved by insulating the exterior walls 410.

Beyond the characteristics of components of the building, itself, there may be characteristics of the contents of the building that may alter the effectiveness and/or efficiency with which the interior may be heated. By way of example, the presence of people and/or other creatures within a building may result in the generation of more heat therein without the expenditure of energy by an energy management system to heat the interior. As will be familiar to those skilled in the art, the bodies of human beings and many other creatures employ various biological processes to maintain particular body temperatures as part of being alive, and such body heat is released into the interior of a building by each human being or other creature within it. Also by way of example, a wide variety of devices and/or types of machinery that may be present within a building (and that perform functions unassociated with an energy management system), and may release various amounts of heat into the interior of the building as part of their normal operation. Further, a number of such other devices and/or types of machinery may be carried by persons who routinely enter and/or exit the building (e.g., portable computers, smart phones, portable beverage coolers, etc.).

Also, regarding heating of the interior of the building 400 (e.g., the interior of the depicted ground floor), various steps may be taken to decrease the amount of energy that may need to be consumed by improving the ability of the building 400 to make use of the radiant heat energy provided by the sun. As is widely known, portions of the exterior wall 410 where the exterior surface material 418 faces towards Earth's equator may receive considerable exposure to sunlight during the day such that the radiant heat energy from the sun may be absorbed and used to provide some of the heat energy that may be relied upon to heat the interior of the building. This may be the case even when the insulation within the exterior walls 410 renders the exterior walls 410 relatively highly resistant to the penetration of heat energy from the outdoors.

Various steps may be taken to improve such absorption and/or penetration of heat energy from sunlight through the exterior walls 410, including preventing the blockage of sunlight to the exterior surface material 418 thereof by trees, etc., and/or painting such exterior surface material 418 with a darker color that is more absorptive of the radiant heat energy of sunlight, and less reflective thereof. Another step may be to arrange the placement and/or relative sizes of the windows of the building 400 so that a greater proportion of the total window surface area is incorporated into portions of the exterior walls 410 that face towards Earth's equator. In this way, during daylight hours, at least some of the sunlight that reaches the building 400 is able to penetrate through such windows and the heat energy thereof is able to assist in heating the interior.

In contrast to the wood-framed exterior wall 410 of the ground floor, the poured concrete exterior wall 430 of the basement may be more prone to allowing heat energy to pass therethrough. This is often not deemed to be an issue of concern as basements are often not a portion of a building in which people dwell, and so there is often little or no concern about the temperature within the interior of a basement. Also, the fact that at least the majority of the exterior walls 430 and floor 440 of a basement are in contact with the ground 490, and the fact that the temperature of the earth 490 remains relatively constant throughout the year often serves to constrain the temperature within the basement to a relatively narrow range that is often deemed to be comfortable enough for most of the purposes for which a basement is typically used (e.g., to house machinery used to provide various utility services within a building). Thus, it is not uncommon for little or no effort to be made in consuming energy to actively control the temperature within the basement.

Theory

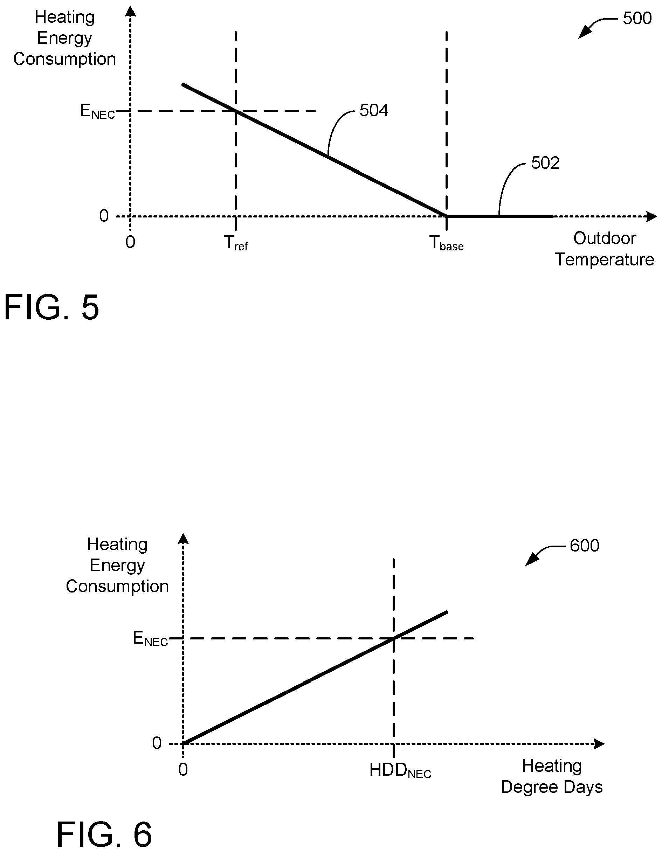

FIGS. 5, 6, 7 and 8, taken together, provide graphs 500, 600, 700 and 800, respectively, depicting aspects of various relationships among values for temperatures and amounts of energy consumed by one or more energy management appliances (e.g., one or more of the energy management appliances 202 of the energy management system 200) to heat a building (e.g., the building 400) under a variety of weather conditions. These same figures, taken together, also graphically depict aspects of relationships among various values that are derived as part of a system manager (e.g., the system manager 220 of the energy management system 200) generating and maintaining a model of such energy consumption that is normalized against weather influences and/or generating estimates of energy savings for heating energy consumed to heat a building.

As will be familiar to those skilled in the art, where it comes to heating a building, the base temperature $T_{base}$ is the outdoor temperature below which energy needs to be consumed to heat the building to maintain the building at a particular setpoint temperature selected by a user for the interior of the building. If the outdoor temperature is above the base temperature $T_{base}$, then no such energy needs to be consumed to heat the building. This is depicted in FIG. 5 where, for a particular setpoint temperature that is assumed to be unchanging, the base temperature $T_{base}$ is depicted as being the outdoor temperature at which a flat line 502 of a zero level of heating energy consumption, and a sloped line 504 of a non-zero linearly increasing level of heating energy consumption meet.

It is this same relationship among the base temperature $T_{base}$, outdoor temperatures and energy consumed to heat a building that forms the basis for heating degree days (HDDs) as described by the following equation:

$$HDD = \begin{cases} T_{base} > T_{outdoor,d} & \sum_{d=1}^{n} \left( T_{base} - T_{outdoor,d} \right) \\ T_{base} \leq T_{outdoor,d} & 0 \end{cases}$$

In this equation, $T_{outdoor,d}$ is the average outdoor temperature for day d. This same relationship is depicted in FIG. 6.

Referring to both FIGS. 5 and 6, in theory, with the values for the base temperature $T_{base}$ and the reference temperature $T_{ref}$ known, and with the slope of the sloped line 504 of non-zero levels of heating energy consumption also known, it should be possible to derive a value for the heating energy consumption to heat the building that is normalized against the influences of the weather (i.e., $E_{NEC}$). It should also be noted that such a derivation of the normalized heat energy consumption $E_{NEC}$ presumes that both the setpoint temperature and thermal characteristics of the building (e.g., level of insulation of the walls, windows, etc.) are unchanging.

More specifically, the normalized heating energy consumption $E_{NEC}$ for heating a building for the current day, with the current day's average outdoor temperature for the entirety of the current day, and with the current base temperature (unchanging as a result of an unchanging setpoint temperature and unchanging thermal characteristics of the building) may be calculated as:

$$E_{NEC} = HDD(T_{base,\ current},\ T_{ref}) \cdot \frac{EC(T_{base,\ current},\ T_{outdoor,current})}{HDD(T_{base,\ current},\ T_{outdoor,current})}$$

In this equation, the variable $EC(T_{base,current},\ T_{outdoor,current})$ is the total heating energy consumption for the current day, with the current base temperature $T_{base}$, and with the average of the entire set of outdoor temperatures measured throughout the current day $T_{outdoor,current}$.

However, as discussed earlier, multiple factors beyond outdoor temperatures exert influence over when heating a building is or is not required to maintain the setpoint temperature within. By way of example, and as previously discussed, the exposure of portions of a building to sunlight during the day can influence whether energy must be consumed to heat the building during at least a portion of the day, and/or at what outdoor temperature such energy consumption begins to be required. On a clear day, a building may be exposed to more sunlight, which may entirely obviate the need to consume such energy during a portion of that day, or at least lower $T_{base}$ such that the outdoor temperature must drop lower before heating-related energy consumption is required. In contrast, during a cloudy day (or at night), a lower amount or lack of sunlight may raise the base temperature $T_{base}$ such that the outdoor temperature need not drop as low before heating-related energy consumption is required.

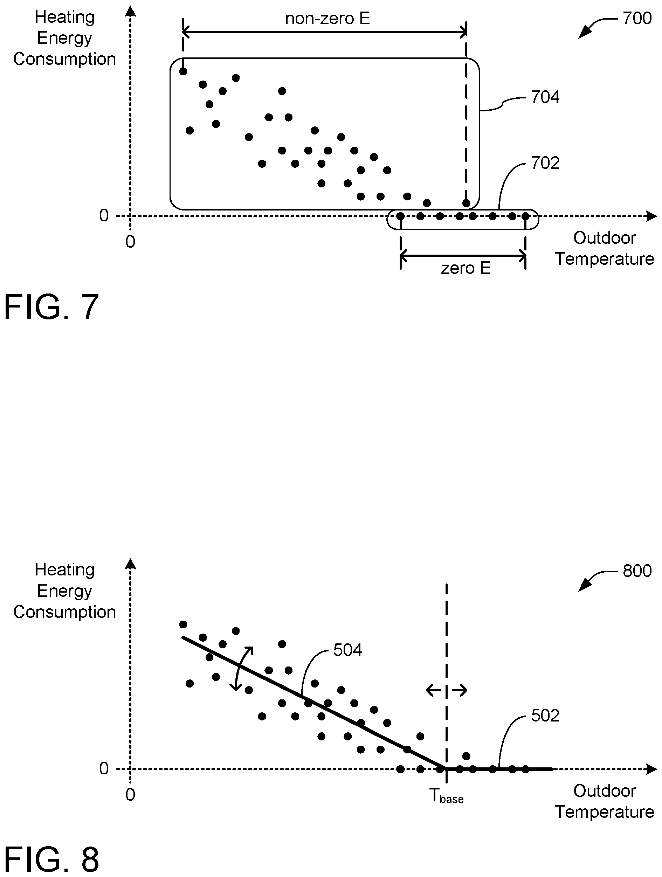

As a result, and as depicted in FIG. 7, such data as average daily temperatures and daily total heating energy consumption may be subject to weather influences. In particular, the set of data points 702 for days during which the total heating energy consumption is zero may partially overlap, by multiple degrees of temperature, with the set of data points 704 for days during which the total heating energy consumption is a non-zero amount.

As depicted in FIG. 8, this overlap may complicate efforts to derive the base temperature $T_{base}$, and the slope of the sloped line 504 of non-zero levels of heating energy consumption. Accordingly, this complicates efforts to accurately derive the normalized heating energy consumption $E_{NEC}$, and in turn, this complicates efforts to generate and maintain a model of energy consumption for heating a building.

However, as a result of the efforts of the inventors in the present application, it has been determined that the normalized heating energy consumption $E_{NEC}$ is able to be estimated with a degree of accuracy that enables a relatively accurate model of energy consumption for heating a building to be generated and maintained. Also, such an estimation has been found to be possible through the use of any one of three different approaches that are based on gathered data that includes average daily temperatures and total daily consumption of energy for heating a building that spans a period of numerous days, such as a period of multiple weeks or multiple months.

Methods

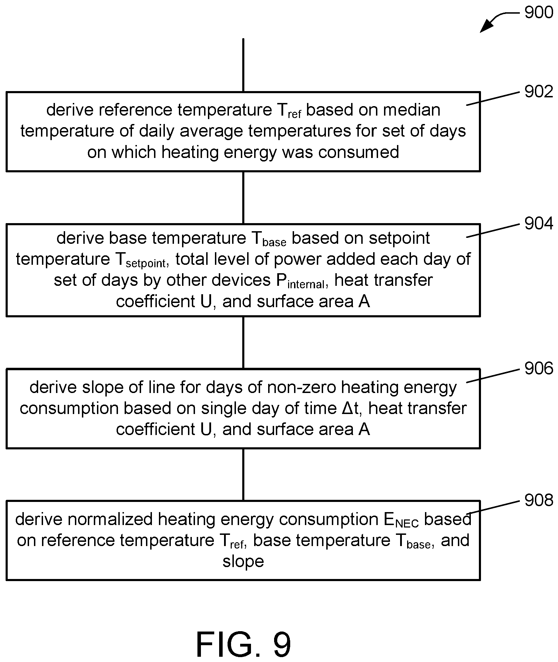

Each of FIGS. 9, 10 and 11 depicts a block diagram of one of the three methods 900, 1000 and 1100, respectively, for estimating the normalized heating energy consumption $E_{NEC}$. Each of these three methods is able to be performed with relatively limited processing and/or data storage resources such that a system manager with relatively limited processing and/or data storage resources may be used. Thus, it may be that each of these three methods is able to be performed within a loop controller of an energy management appliance (e.g., the controller 314 of the boiler 302), or within a network communications device (e.g., a network hub, switch, modem, edge device, etc.). In this way, the need to provide a physically separate, more sophisticated, and more expensive computer or other device serving as a system manager may be averted.

Each of these three methods includes deriving the reference temperature $T_{ref}$. As will be readily recognized by those skilled in the art, when estimating levels of energy consumed in heating a building (as opposed to cooling a building), the reference temperature $T_{ref}$ should be chosen to be lower than the base temperature $T_{base}$, so as to be within a range of temperatures at which the consumption of heating energy is required. However, the reference temperature $T_{ref}$ should not be chosen to be too low. As a result of the efforts of the inventors in the present application, it has been determined that consistently good results in estimating the normalized heating energy consumption $E_{NEC}$ are achieved by setting the reference temperature $T_{ref}$ to be at the median temperature of the daily average temperatures for the set of daily average outdoor temperatures that are associated with the set of data points 704 (see FIG. 4) for days on which heating energy was consumed for heating. Alternatively, good results in estimating the normalized heating energy consumption $E_{NEC}$ have been found to be achieved by setting the reference temperature $T_{ref}$ to either of the experimentally derived values of 3°C or 5°C.

Turning to FIG. 9, the first of the three methods may employ a calculated balance of levels of heat energy. The reference temperature $T_{ref}$ may be derived at block 902 in the manner just described. For a relatively simple building, such as an individual house, it is assumed that a balance of power levels exists as described by the following initial equation:

$$P_{boiler} + P_{internal} = UA(T_{indoor} - T_{outdoor})$$

$P_{boiler}$ is the total daily power introduced into the house by a boiler (or other form of energy management appliance that is used to heat the house), $P_{internal}$ is the total daily power level added to the interior of the house by all other devices within the house in the form of heat, $U$ is the overall heat transfer coefficient between the interior of the house and the environment outside of the house, $A$ is the surface area of the house, $T_{indoor}$ is the daily average indoor temperature within the house, and $T_{outdoor}$ is the daily average temperature outside of the house.

In using the above initial equation describing a balance of power levels, it is assumed that the gathered data is stored as data points separated by a daily interval of time, and not a shorter interval of time (e.g., hourly). It should be noted that such storage of the gathered data with a daily interval of time (e.g., daily averages and daily totals), as opposed to an hourly interval of time, serves both to reduce storage requirements, and to filter out or smoothen out dynamic heating behavior that may occur across a day long period of time.

Since, as previously discussed, the base temperature $T_{base}$ is the outdoor temperature below which heating is required to keep the indoor temperature $T_{indoor}$ at the setpoint temperature $T_{setpoint}$, the above initial equation enables the base temperature $T_{base}$ to be derived at block 904 as follows:

$$T_{base} = T_{setpoint} - \frac{P_{internal}}{UA}$$

Since it is assumed that the setpoint temperature $T_{setpoint}$ is a steady state temperature, the further assumption may be made that $T_{indoor} = T_{setpoint}$. Thus, the above initial equation may be rewritten to derive $P_{boiler}$ as a function of $T_{outdoor}$:

$$P_{boiler}(T_{outdoor}) = UA(T_{setpoint} - T_{outdoor}) - P_{internal}$$

The following corresponding equation describes the daily aggregated balance of heat energy:

$$E_{boiler}(T_{outdoor}) = \Delta t \cdot UA(T_{setpoint} - T_{outdoor}) - E_{internal}$$

$\Delta t$ represents a single day of time. The multiplication product $\Delta t \cdot UA$ represents the slope of the sloped line 504 (see FIG. 5) for the relationship between the outdoor temperature $T_{outdoor}$ and total amount of heating energy consumed for the set of data points 704 (see FIG. 7) associated with days on which heating energy was consumed. Thus, at block 906, that slope may be derived as $\Delta t \cdot UA$.

From the above equation for calculating $E_{boiler}$, the following equation is able to be derived for estimating $E_{NEC}$:

$$E_{NEC} = \Delta t \cdot UA (T_{setpoint} - T_{ref}) - E_{internal}$$

At block 908, with $T_{ref}$, $T_{base}$ and the slope having been derived, $E_{NEC}$ may be estimated using the above equation.

It should again be noted that the above approach is at least partially based on an assumption of the gathered data being stored with a daily interval of time such that the interval of time between temporally adjacent entries is a single day. However, if the gathered data was both collected and stored with a shorter time interval than a daily time interval, then the opportunity of such higher frequency data may be used to improve the accuracy of the estimation of the normalized heating energy consumption $E_{NEC}$. To do so, the above initial equation describing a balance of power levels may be modified to add another term that enables better fitting to account for the smaller interval of time dt:

$$P_{boiler} + P_{internal} = UA(T_{indoor} - T_{outdoor}) + C \frac{dT_{indoor}}{dt}$$

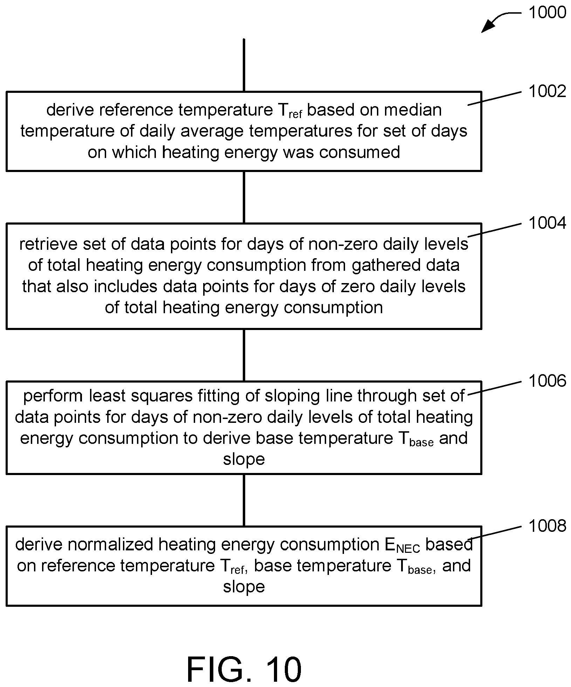

Turning to FIG. 10, the second of the three methods may employ a fitted line of increasing heat energy. In a manner similar to the method of FIG. 9, at 1002, the reference temperature $T_{ref}$ may be derived at block 1002.

At block 1004, a set of data points 704 (see FIG. 7) in the gathered data for days on which there was a non-zero level of heating energy consumed to heat a building may be separated from another set of data points 702 (again, see FIG. 7) in the gathered data for days on which there was a zero level of heating energy consumed for the same building.

At block 1006, a linear least squares fitting may be performed to derive a sloping line through the set of data points for the days with a non-zero level of total consumption of heating energy. In this way, a direct relationship may be derived between the heating energy consumed by a boiler $E_{boiler}$ (or other energy management appliance used for heating) and the outdoor temperature $T_{outdoor}$. Also in this way, the slope of that line may be derived, along with the base temperature $T_{base}$ for the point along that line at which there is a zero amount of total energy consumed to heat the building.

At block 1008, with $T_{ref}$, $T_{base}$ and the slope having been derived, $E_{NEC}$ may be estimated by evaluating the linear fit at the reference temperature $T_{ref}$.

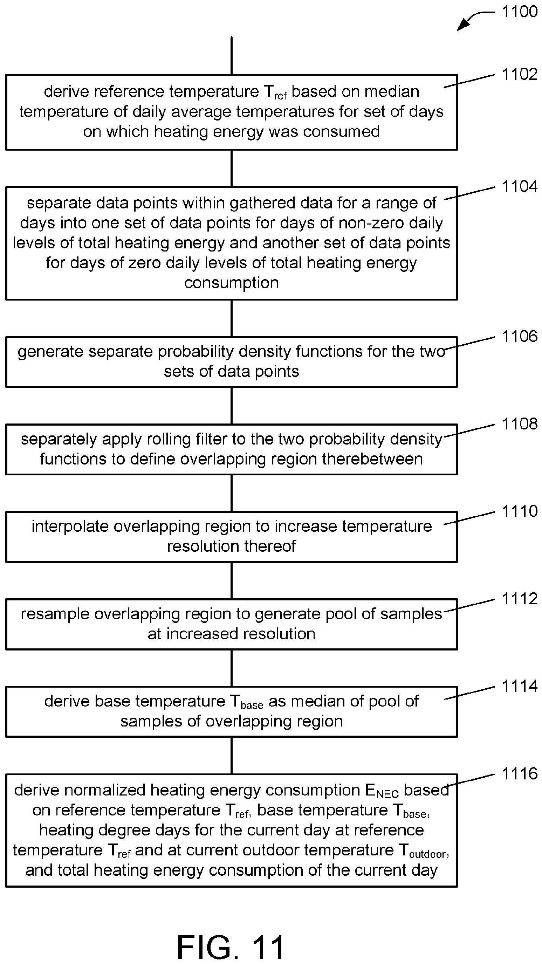

Turning to FIG. 11, the third of the three methods may employ probability density functions. Again, in a manner similar to the methods of FIGS. 9 and 10, at 1102, the reference temperature $T_{ref}$ may be derived at block 1102.

At block 1104, a set of data points 704 (see FIG. 7) in the gathered data for days on which there was a non-zero level of heating energy consumed to heat a building may be separated from another set of data points 702 in the gathered data for days on which there was a zero level of heating energy consumed for the same building. Again, as was depicted in FIG. 7, these two sets 702 and 704 partially overlap in their outdoor temperatures $T_{outdoor}$. Efforts by the inventors in the present application have revealed that the base temperature $T_{base}$ is usually a temperature within this range of overlapping tem peratures.

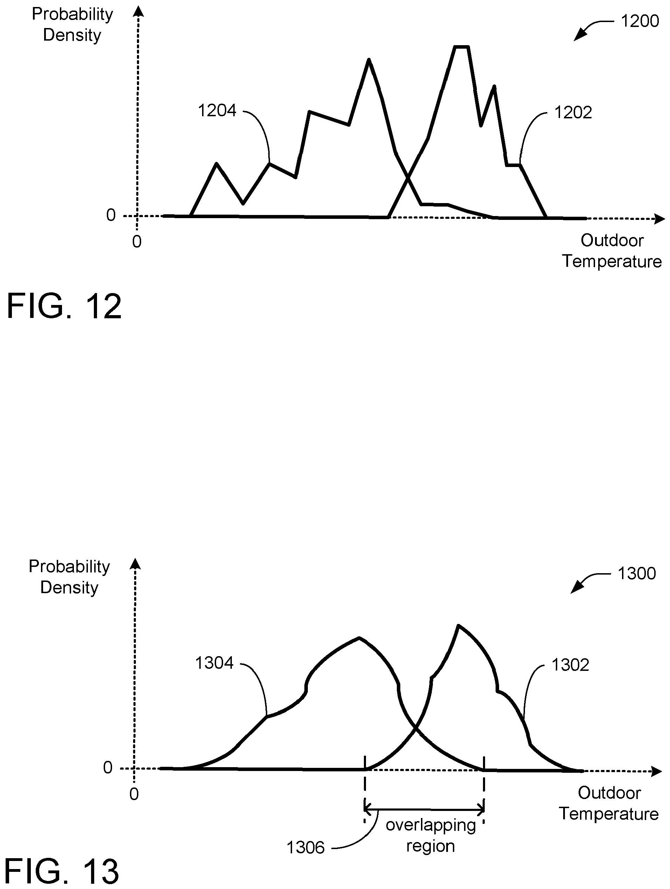

At block 1106, separate probability density functions are generated for the two sets of data points 702 and 704. FIG. 12 depicts graphical plots for these two separate probability density functions 1202 and 1204 generated from the two sets of data points 702 and 704, respectively.

At block 1108, a rolling filter is separately applied to each of the two probability density functions 1202 and 1204. FIG. 13 depicts graphical plots for the resulting two smoothened probability density functions 1302 and 1304, respectively, and the resulting overlapping region 1306.

At block 1110, the overlapping region 1306 may be interpolated to increase its temperature resolution.

At block 1112, following such interpolation, the overlapping region 1306 may be resampled to generate a pool of samples at the increased resolution.

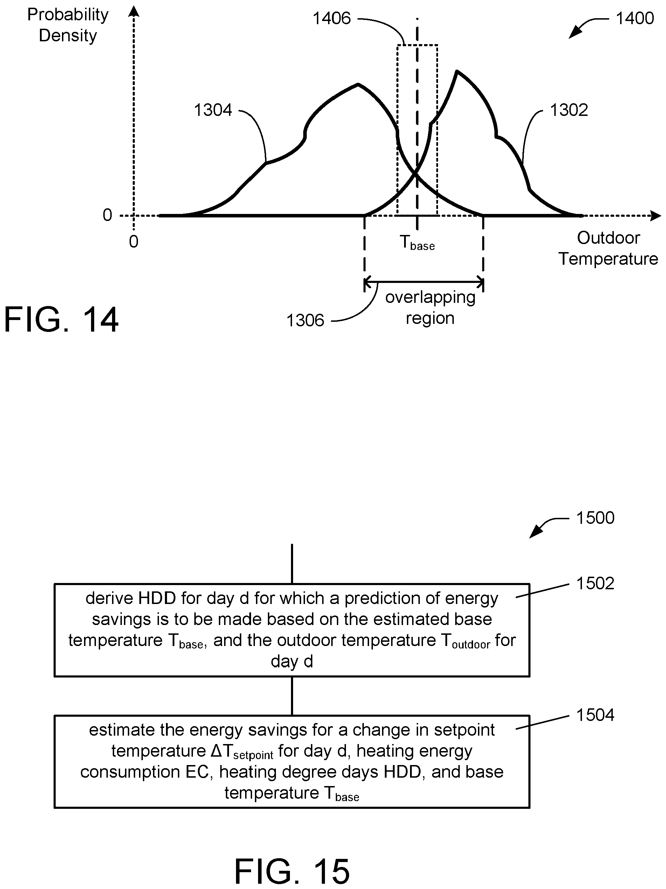

At block 1114, the base temperature $T_{base}$ is derived as the median of the pool of samples. Efforts by the inventors in the present application have revealed that such a median relatively easily provides a good approximation of the base temperature $T_{base}$. Such efforts have also revealed that the corresponding interquartile range of temperatures usually reliably provide the uncertainty for this base temperature. FIG. 14 graphically depicts this uncertainty as a region of uncertainty 1406.

At block 1116, with $T_{ref}$, and $T_{base}$ having been derived, $E_{NEC}$ may be estimated using the aforementioned equation:

$$E_{NEC} = HDD(T_{base,\ current},\ T_{ref}) \cdot \frac{EC(T_{base,\ current},\ T_{outdoor,current})}{HDD(T_{base,\ current},\ T_{outdoor,current})}$$

Again, in this equation, the variable $EC(T_{base,current}, T_{outdoor,current})$ is the total heating energy consumption for the current day, with the current base temperature $T_{base}$, and with the average of the entire set of outdoor temperatures measured throughout the current day $T_{outdoor,current}$.

Referring back to FIGS. 9-11, the third method 1100 of FIG. 11 may enable the calculation of the base temperature $T_{base}$ with relatively high accuracy. However, supporting its use of probability density functions in the third method 1100 requires a relatively large set of data points spanning numerous days that must include a combination of days during which heating is required and days during which heating is not required. In contrast, the second method 1000 of FIG. 10 may require a smaller set of data points spanning fewer days, and its smaller data set may not be required to include a combination of days during which heating is required and days during which heating is not required. However, its use of line fitting may result in less accuracy than the third method 1100. The first method 900 of FIG. 9 may offer a combination of some of the advantages of both the third method 1100 and second method 1000. More specifically, its use of a calculated balance of levels of heat energy may enable the use of a smaller set of data points spanning fewer days, and its smaller set of data points may not be required to include a combination of days during which heating is required and days during which heating is not required. Additionally, its accuracy may be greater than the second method 1000, though not greater than the first method 900.

In some implementations, advantage may be taken of these various characteristics of these differing methods by employing different ones of these differing methods at different times of the year. By way of example, it may be that an implementation makes use of the greater accuracy of the third method 1100 by employing the third method 1100 during the Spring and/or Fall seasons during which there are combinations of days during which heating is required and days during which heating is not required. Such an implementation may then make use of the lack of need for such a combination of days by employing the first method 900 and/or the second method 1000 during the Summer and/or Winter seasons.

FIG. 15 depicts a block diagram of a method 1500 for estimating energy savings following the performance of any of the above three methods set forth in reference to FIGS. 9, 10 and 11 for estimating the normalized heating energy consumption $E_{NEC}$.

At block 1502, for the particular day d for which a prediction of energy savings is to be made, the base temperature $T_{base}$ may be used to calculate the heating degree days HDD using the aforementioned equation:

$$HDD = \begin{cases} T_{base} > T_{outdoor,d} & \sum_{d=1}^{n} \left(T_{base} - T_{outdoor,d}\right) \\ T_{base} \leq T_{outdoor,d} & 0 \end{cases}$$

Again, and in accordance with the relationships depicted in FIGS. 5 and 6, it is assumed that, when the outdoor temperature is below the base temperature $T_{base}$, the heating energy consumption EC scales linearly with the outdoor temperature (see FIG. 6). Thus, the heating energy consumption EC should also scale linearly with the heating degree days HDD. It is assumed that the slope of this linear scaling relationship should be constant, which may be expressed as:

$$\frac{EC}{HDD} = constant$$

It is also assumed that changes made to the setpoint temperature $T_{setpoint}$ should directly change the base temperature.

At block 1504, the assumption about the linearity of the between heating energy consumption EC and HDD, and the assumption about the relationship between the base temperature $T_{base}$ and the setpoint temperature $T_{setpoint}$ can be combined to compute the predicted energy savings for a reduction in the heating energy consumption EC as follows:

$$Energy\ Savings = \frac{EC\left(T_{base} + \Delta T_{setpoint}\right)}{EC\left(T_{base}\right)} = \frac{HDD\left(T_{base} + \Delta T_{setpoint}\right)}{HDD\left(T_{base}\right)}$$

$\Delta T_{setpoint}$ represents the change in the setpoint temperature from the setpoint temperature $T_{setpoint}$ that may have been used in the aforementioned analyses to derive the base temperature $T_{base}$.

As previously discussed, this energy savings estimate may be used in further analyses to derive recommendations in considering changes to using more environmentally friendly technologies for heating, and/or in considering the addition of insulation and/or other changes to make to a building.

Further, if the granularity of the data points is increased from daily temperatures and measures of heating energy consumption to hourly, then more sophisticated predictive analyses may be performed to deal with energy-related variables that are otherwise unseen with a daily granularity, such as variations in the production of electricity that occur within each day. Such an hourly granularity (or other granularity finer than whole days) also makes visible such aspects of energy as peak demand hours for electricity received from a grid.

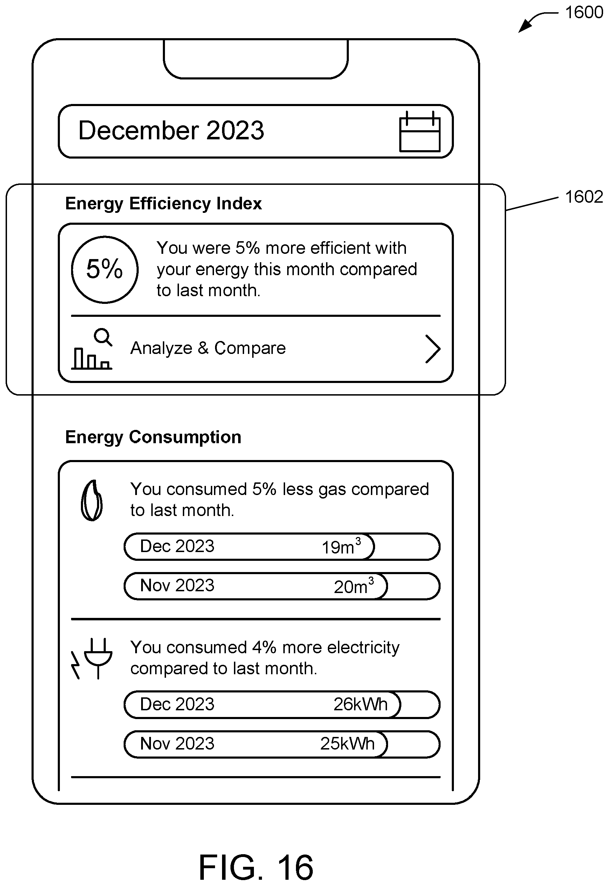

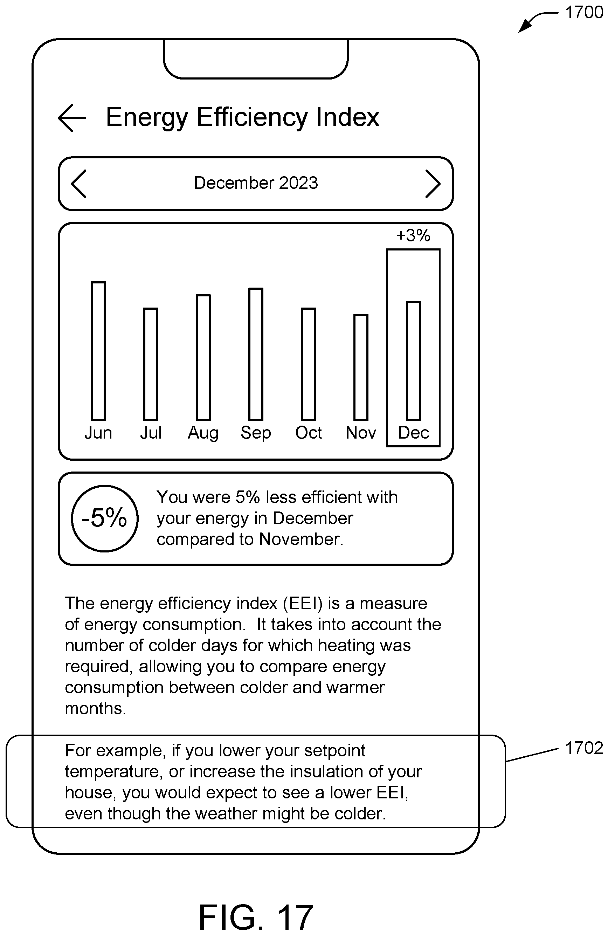

FIG. 16 depicts an example of a visual presentation 1600 of an indication 1602 of a degree of efficiency of heating energy consumption for a specified month (e.g., the month of December of 2023) to heat a particular house or other structure (e.g., the building 400 of FIG. 4). FIG. 17 depicts an example of a visual presentation 1700 of a recommendation 1702 to change a setpoint temperature $T_{setpoint}$ used in heating a particular house or other structure. Again, such visualizations may be presented on a viewing screen of a controller of an energy management system (e.g., the controller 100 of FIG. 1) or a viewing screen of a remote portable device (e.g., a tablet computer or smart phone).

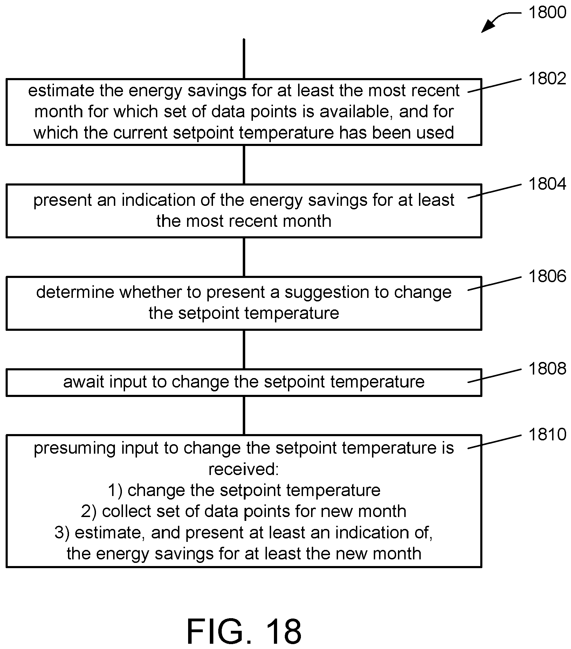

FIG. 18 depicts a block diagram of a method 1800 for guiding a user of an energy management system through improving a degree of efficiency of heating energy consumption to heat a particular house or other structure.

At block 1802, energy savings may be estimated for at least the most recent month for which the current setpoint temperature of an energy management system has been continuously used, and for which a set of data points are available. It should be noted that, depending on the current seasons and/or the quantity of months that such a set of data points spans, different ones of the earlier-described methods may be used. More specifically, where such a set of data points is available for such a continuously used current setpoint temperature, and where the multiple months covered by such a set of data points and setpoint temperature extend through a season of Spring or Fall where there are days during which heating is required and days during which heating is not required, then the third method 1100 of FIG. 11 may be used. However, where either the available set of data points or the continuous use of the current setpoint temperature does not extend backward in time through multiple months, or where such multiple months do not include a combination of days in which heating was required and days in which heating was not required, then either the second method 1000 of FIG. 10 or the first method 900 of FIG. 9 may be used.

At block 1804, an indication of such energy savings, such as an indication of a degree of efficiency of heating energy consumption, may be visually presented on a viewing screen of a controller of the energy management system or of a remote portable device (e.g., the visual presentation 1600 of the indication 1602).

At block 1806, a determination may be made as to whether or not to visually present a suggestion to a user of the energy management system to change the setpoint temperature to increase such efficiency, and thereby increase such energy savings. It should be noted that, the current level of energy efficiency or energy savings may be compared to a predetermined minimum threshold level thereof as part of making such a determination.

At block 1808, input indicative of a change to the setpoint temperature may be awaited. It should be noted that such awaiting of such input may take place regardless of whether the suggestion to make such a change is visually presented, or not.

At block 1810, presuming such input to change the setpoint temperature is received, then: 1) the setpoint temperature may be so changed, 2) a new set of data points for a new month may be collected, and/or 3) at least a new indication of energy savings for at least the new month may be estimated based on at least the new set of data points and visually presented. It should be noted that, as a result of having a new setpoint temperature and just the new month's set of data points, it may be that the new estimate may need to be generated using either the first method 900 or the second method 1000.

It will be understood that, although the embodiments and/or implementations presented herein have been described with reference to specific features and structures, various modifications and combinations may be made without departing from the disclosure. For example, it is contemplated that in some implementations, the features described above may be used in different arrangements, or in other combinations. The specification and drawings are, accordingly, to be regarded simply as an illustration of the discussed implementations or embodiments and their principles as defined by the appended claims, and are contemplated to cover any and all modifications, variations, combinations or equivalents that fall within the scope of the present disclosure. It should also be understood that, although methods have been presented and expressed herein in terms of heating a building, similar methods may be used in cooling a building.

REFERENCE SIGNS

| | |
|---|---|
| 100 | controller |
| 102 | processors |
| 110 | memory |
| 112 | data |

| 114 | operating system |
|------|-------------------|
| 116 | program |
| 120 | storage interface |
| 125 | storage device |
| 140 | communication interface |
| 150 | bus |
| 160 | communication channel |
| 200 | energy management system |
| 202 | energy management appliances |
| 204 | boiler |
| 206 | heat pump |
| 208 | photovoltaic panel |
| 210 | wind turbine |
| 212 | buffer storage |
| 214 | room units |
| 216 | sensors |
| 218 | smart meter |
| 220 | system manager |
| 230 | communication channel |
| 302 | boiler |
| 304 | tank |
| 306 | heat exchanger |
| 308 | burner |
| 310 | supply pipe |
| 312 | return pipe |
| 314 | controller |
| 316 | sensor |
| 318 | communication module |
| 400 | building |
| 410 | exterior wall |
| 412 | interior surface material |
| 414 | wall studs |
| 416 | exterior sheathing |
| 418 | exterior surface material |
| 420 | floor |
| 422 | subfloor material |
| 424 | floor joists |
| 430 | exterior wall |
| 440 | floor |
| 500 | graph |
| 502 | flat line |
| 504 | sloped line |
| 600 | graph |
| 700 | graph |
| 702 | set of points for days of zero heating energy consumption |
| 704 | set of points for days of non-zero heating energy consumption |
| 800 | graph |
| 900 | method |
| 1000 | method |
| 1100 | method |
| 1200 | graph |
| 1202 | probability density function |
| 1204 | probability density function |
| 1300 | graph |
| 1302 | smoothened probability density function |
| 1304 | smoothened probability density function |
| 1306 | overlapping region |
| 1400 | graph |

1406    region of uncertainty
1500    method
1600    visual presentation
1602    indication of a degree of efficiency
1700    visual presentation
1702    recommendation
1800    method

**Claims**

1.  A computer-implemented method (900, 1000, 1100) for characterizing energy consumption for heating an indoor building (400), the method comprising:

    receiving a setpoint temperature for the building (400);
    determining an average outdoor temperature over a first predetermined time period for a location of the building (400);
    measuring a total central heating energy consumption for the building (400) over the first predetermined time period;
    adding the determined average outdoor temperature and measured total central heating energy consumption to a first data set (112) comprising a plurality of average outdoor temperatures and corresponding total central heating energy consumptions over a plurality of predetermined time periods having durations substantially the same as the first predetermined time period;
    estimating a weather independent normalized heating energy consumption for maintaining the setpoint temperature in the building (400) based on a predetermined reference outdoor temperature and the first data set (112); and
    characterizing the heating energy consumption for heating the building (400) based on the normalized heating energy consumption and a base temperature.

2.  The method of claim 1, wherein:

    the first predetermined time period has a duration of one day;
    the plurality of average outdoor temperatures comprise daily average outdoor temperatures; and
    the total central heating energy consumptions comprise daily total heating energy consumptions on days for which the total central heating energy consumption was zero and on days for which the total heating energy consumption was non-zero.

3.  The method of claim 1, wherein the predetermined reference outdoor temperature is selected to be near the median of daily average outdoor temperatures that lie below the base temperature.

4.  The method of claim 1, wherein the predetermined reference outdoor temperature is 3° C or 5° C.

5.  The method of any one of the preceding claims, wherein calculating the weather independent normalized heating energy consumption for the building (400) based on the first data set comprises using a linear fit through data points of the first data set (112).

6.  The method of claim 5, wherein the weather independent normalized heating energy consumption for the building (400) is determined by evaluating the linear fit at the predetermined reference outdoor temperature.

7.  The method of claim 5 or claim 6, wherein the linear fit comprises a least squares fit.

8.  The method of any one of claims 1 to 4, wherein calculating the weather independent normalized heating energy consumption for the building (400) based on the first data set (112) comprises fitting the first data set to a model of a heat balance for the building (400).

9.  The method of any one of claims 1 to 4, wherein calculating the weather independent normalized heating energy consumption for the building (400) based on the first data set (112) comprises calculating a heating energy consumption per heating degree day, wherein heating degree days are determined by:

subtracting the average temperature at the building (400) location over a day from the base temperature if the average temperature at the building location over the day is lower than the base temperature; and determining the heating degree days to be zero for days on which the average temperature at the building location over the day is greater than or equal to the base temperature.

10. The method of claim 9, wherein calculating the base temperature comprises:

calculating a zero energy probability density function (1202) based on outdoor temperature and corresponding measured total central heating energy consumptions in the first data set (112) for which the measured total central heating energy consumption was zero, the zero energy probability density function (1202) providing a probability of having a total central heating energy consumption of zero for a given outdoor temperature;
calculating a nonzero energy probability density function (1204) based on outdoor temperature and corresponding measured total central heating energy consumptions in the first data set (112) for which the measured total central heating energy consumption was non-zero, the nonzero energy probability density function (1204) providing a probability of having a non-zero total central heating energy consumption for a given outdoor temperature;
determining an overlap range (1306) of outdoor temperatures over which the zero energy probability density function (1202) and the nonzero probability density function (1204) overlap; and
calculating the base temperature to be a temperature within the overlap range (1306).

11. The method of any one of the preceding claims, wherein the first predetermined time period has a duration of one hour or one day.

12. The method of any one of the preceding claims, wherein determining an average outdoor temperature comprises accessing the average outdoor temperature for a location of the building in a remotely maintained database.

13. The method of any one of claims 1 to 11, wherein determining an average outdoor temperature comprises measuring the outdoor temperature at the location of the building (400) using a temperature sensor (216).

14. An energy management system (200) comprising:

a processor (102); and
memory (110) to store program instructions (116) operable to cause the processor (102) to perform operations according to any of claims 1 to 13.

15. A computer program product comprising program instructions (116) operable to cause a processor (102) to perform operations according to any of claims 1 to 13.

Fig. 1

Fig. 2

Fig. 3

FIG. 4

FIG. 5

FIG. 6

FIG. 7

FIG. 8

900

derive reference temperature $T_{ref}$ based on median temperature of daily average temperatures for set of days on which heating energy was consumed ⌐ 902

derive base temperature $T_{base}$ based on setpoint temperature $T_{setpoint}$, total level of power added each day of set of days by other devices $P_{internal}$, heat transfer coefficient U, and surface area A ⌐ 904

derive slope of line for days of non-zero heating energy consumption based on single day of time $\Delta t$, heat transfer coefficient U, and surface area A ⌐ 906

derive normalized heating energy consumption $E_{NEC}$ based on reference temperature $T_{ref}$, base temperature $T_{base}$, and slope ⌐ 908

# FIG. 9

1000

1002 — derive reference temperature $T_{ref}$ based on median temperature of daily average temperatures for set of days on which heating energy was consumed

1004 — retrieve set of data points for days of non-zero daily levels of total heating energy consumption from gathered data that also includes data points for days of zero daily levels of total heating energy consumption

1006 — perform least squares fitting of sloping line through set of data points for days of non-zero daily levels of total heating energy consumption to derive base temperature $T_{base}$ and slope

1008 — derive normalized heating energy consumption $E_{NEC}$ based on reference temperature $T_{ref}$, base temperature $T_{base}$, and slope

FIG. 10

1100

derive reference temperature $T_{ref}$ based on median temperature of daily average temperatures for set of days on which heating energy was consumed — 1102

separate data points within gathered data for a range of days into one set of data points for days of non-zero daily levels of total heating energy and another set of data points for days of zero daily levels of total heating energy consumption — 1104

generate separate probability density functions for the two sets of data points — 1106

separately apply rolling filter to the two probability density functions to define overlapping region therebetween — 1108

interpolate overlapping region to increase temperature resolution thereof — 1110

resample overlapping region to generate pool of samples at increased resolution — 1112

derive base temperature $T_{base}$ as median of pool of samples of overlapping region — 1114

derive normalized heating energy consumption $E_{NEC}$ based on reference temperature $T_{ref}$, base temperature $T_{base}$, heating degree days for the current day at reference temperature $T_{ref}$ and at current outdoor temperature $T_{outdoor}$, and total heating energy consumption of the current day — 1116

FIG. 11

FIG. 12

FIG. 13

FIG. 14

FIG. 15

FIG. 16

1700

### Energy Efficiency Index

December 2023

+3%

Jun Jul Aug Sep Oct Nov Dec

-5% You were 5% less efficient with your energy in December compared to November.

The energy efficiency index (EEI) is a measure of energy consumption. It takes into account the number of colder days for which heating was required, allowing you to compare energy consumption between colder and warmer months.

For example, if you lower your setpoint temperature, or increase the insulation of your house, you would expect to see a lower EEI, even though the weather might be colder.

1702

## FIG. 17

1800

estimate the energy savings for at least the most recent month for which set of data points is available, and for which the current setpoint temperature has been used — 1802

present an indication of the energy savings for at least the most recent month — 1804

determine whether to present a suggestion to change the setpoint temperature — 1806

await input to change the setpoint temperature — 1808

presuming input to change the setpoint temperature is received:
1) change the setpoint temperature
2) collect set of data points for new month
3) estimate, and present at least an indication of, the energy savings for at least the new month — 1810

FIG. 18

EP 4 625 276 A1

# EUROPEAN SEARCH REPORT

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/338969 A1 (HOFF THOMAS E [US]) 7 November 2019 (2019-11-07) | 1,2, 4-12,14, 15 | INV. G06Q10/04 F24D19/10 |
| Y | * paragraph [0056] - paragraph [0062] * * paragraph [0116] - paragraph [0119] * * figures 2,3,4,5,15,23 * | 3,13 | F24F11/46 G01K3/04 G06Q50/06 |
| Y | US 2014/316584 A1 (MATSUOKA YOKY [US] ET AL) 23 October 2014 (2014-10-23) | 3,13 | |
| A | * paragraph [0058] - paragraph [0082] * | 1,2, 4-12,14, 15 | |
| A | US 2018/039292 A1 (VAN BERKEL SAMUEL P [CA] ET AL) 8 February 2018 (2018-02-08) * figure 3 * | 1-15 | |
| A | EP 2 733 563 A2 (THERE CORP OY [FI]) 21 May 2014 (2014-05-21) * paragraph [0007] - paragraph [0031] * * figure 5 * | 1-15 | |

TECHNICAL FIELDS SEARCHED (IPC)

G06Q

The present search report has been drawn up for all claims

| Place of search | Date of completion of the search | Examiner |
|---|---|---|
| Munich | 31 May 2024 | Radovic, Dusica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 6103

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | Publication date |
|---|---|---|---|
| US 2019338969 A1 | 07-11-2019 | US 10359206 B1 | 23-07-2019 |
| | | US 2019338969 A1 | 07-11-2019 |
| | | US 2021048210 A1 | 18-02-2021 |
| | | US 2021332998 A1 | 28-10-2021 |
| | | US 2023213228 A1 | 06-07-2023 |
| US 2014316584 A1 | 23-10-2014 | AU 2014254308 A1 | 29-10-2015 |
| | | AU 2018202477 A1 | 26-04-2018 |
| | | CA 2909590 A1 | 23-10-2014 |
| | | CN 105247290 A | 13-01-2016 |
| | | CN 108536188 A | 14-09-2018 |
| | | EP 2986921 A1 | 24-02-2016 |
| | | JP 6419782 B2 | 07-11-2018 |
| | | JP 2016522663 A | 28-07-2016 |
| | | JP 2019032157 A | 28-02-2019 |
| | | KR 20150145259 A | 29-12-2015 |
| | | US 2014316584 A1 | 23-10-2014 |
| | | US 2016195289 A1 | 07-07-2016 |
| | | US 2019257542 A1 | 22-08-2019 |
| | | WO 2014172149 A1 | 23-10-2014 |
| US 2018039292 A1 | 08-02-2018 | CA 2975467 A1 | 04-02-2018 |
| | | US 2018039292 A1 | 08-02-2018 |
| | | US 2020150700 A1 | 14-05-2020 |
| EP 2733563 A2 | 21-05-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9727063 B
- US 20150267935 A
- US 9453655 B
- US 11268732 B
- US 9618227 B